# EUROPÄISCHE PATENTSCHRIFT

(11) **EP 2 594 040 B1**
(45) Veröffentlichungstag und Bekanntmachung des Hinweises auf die Patenterteilung: **24.02.2016**
(21) Anmeldenummer: 11731265.2
(22) Anmeldetag: 07.07.2011
(51) Int. Cl.: H04L 12/46, H04L 12/875, H04L 12/40

(54) **KOMMUNIKATIONSSYSTEM UND VERFAHREN ZUR ISOCHRONEN DATENÜBERTRAGUNG IN ECHTZEIT**
COMMUNICATION SYSTEM AND METHOD FOR ISOCHRONOUS DATA TRANSMISSION IN REAL TIME
SYSTÈME DE COMMUNICATION ET PROCÉDÉ DE TRANSMISSION ISOCHRONE DE DONNÉES EN TEMPS RÉEL

(30) Priorität: 25.11.2010 DE 102010052322; 14.07.2010 DE 102010027167
(43) Veröffentlichungstag der Anmeldung: 22.05.2013
(73) Patentinhaber: Phoenix Contact GmbH & Co. KG, 32825 Blomberg (DE)
(72) Erfinder: LESSMANN, Gunnar, 33039 Nieheim (DE); PIEPER, Carsten, 59510 Lippetal (DE); SCHRIEGEL, Sebastian, 32839 Steinheim (DE); BREIT, Eugen, 32825 Blomberg (DE); SCHUMACHER, Markus, 33178 Borchen (DE)
(74) Vertreter: Blumbach Zinngrebe
(86) Internationale Anmeldenummer: PCT/EP2011/003380
(87) Internationale Veröffentlichungsnummer: WO 2012/007128

(56) Entgegenhaltungen:
- WO-A1-02/43336
- WO-A2-03/027784
- WO-A2-03/036832
- DE-A1- 10 228 823
- HANZAÌ LEK Z ET AL: "Profinet IO IRT Message Scheduling With Temporal Constraints", IEEE TRANSACTIONS ON INDUSTRIAL INFORMATICS, IEEE SERVICE CENTER, NEW YORK, NY, US, Bd. 6, Nr. 3, 1. Juli 2010 (2010-07-01), Seiten 369-380, XP011334332, ISSN: 1551-3203, DOI: 10.1109/TII.2010.2052819

## Beschreibung

Die Erfindung betrifft sowohl ein Kommunikationssystem als auch ein Verfahren zur isochronen Übertragung von echtzeitkritischen Daten über ein echtzeitgesteuertes Ethernet-Datennetz, welches wenigstens eine erste Kommunikationseinrichtung mit einem synchronisierten Zeitgeber aufweist und dazu ausgebildet ist, echtzeitkritische Datentelegramme unter Anwendung einer geplanten Echtzeitsteuerung zu übertragen.

Ein solches echtzeitgesteuertes Ethernet-Datennetz wird beispielsweise durch den PROFINET IRT Standard definiert.

Seit geraumer Zeit werden in Automatisierungssystemen Ethernet-basierte Datennetze als Feldbusse eingesetzt, welche Zykluszeiten von einigen Millisekunden ermöglichen. Allerdings gibt es Anwendungen, wie zum Beispiel die Steuerung komplexer Antriebssysteme, die deutlich kürzere Kommunikationszyklen, zum Beispiel im Millisekunden-Bereich, erfordern. Die Steuerung von Antriebssystemen ist extrem zeitkritisch, das heißt sie müssen zu bestimmten Zeiten angesteuert werden, um Fehlfunktionen zu verhindern. Benötig wird also ein Kommunikationssystem, welches echtzeitkritische Daten in kurzen Kommunikationszyklen übertragen kann.

Um die Ethernet-Technologie in echtzeitkritischen Systemen verwenden zu können, wurde der oben erwähnte PROFINET IRT Standard eingeführt. Die Buchstaben IRT stehen hierbei für Isochronous Real Time, also einer Technik, die eine taktgesteuerte Datenübertragung in Echtzeit ermöglicht.

PROFINET IRT Systeme ermöglichen es, echtzeitkritische und nicht echtzeitkritische Daten in Kommunikationszyklen einstellbarer zeitlicher Länge über ein schaltbares Ethernet-Datennetz zu übertragen. Hierzu wird jeder Kommunikationszyklus in einen ersten Zeitbereich, in welchem echtzeitkritische Daten übertragen werden können, und in einen zweiten Zeitbereich, in welchem nicht echtzeitkritische Daten übertragen werden können, unterteilt. Um die erforderliche Zeitgenauigkeit in einem solchen System gewährleisten zu können, werden die Zeitpunkte zum Senden oder Weiterleiten der echtzeitkritischen Daten oder echtzeitkritischen Datentelegramme zeitlich geplant. Der PROFINET IRT Standard sieht hierzu vor, dass in allen beteiligten Koppeleinrichtungen und Teilnehmern, welche echtzeitkritische Datentelegramme weiterleiten, senden und/oder empfangen können, die Weiterleitungs-, Sende- und Empfangszeitpunkte der zu übertragenden echtzeitkritischen Datentelegramme abgelegt werden, und zwar vorteilhafter Weise vor Beginn der Datenübertragung. Koppeleinrichtungen und Teilnehmer müssen daher in der Lage sein, PROFINET-IRT Datentelegramme im Millisekunden-Bereich weiterzuleiten bzw. zu senden. Um die exakt geplanten Sende- oder Weiterleitungszeiten einhalten zu können, benötigen die Koppeleinrichtungen und Teilnehmern spezielle Hardwarekomponenten, die auf dem Markt erhältlich sind. Insbesondere verfügt jede IRT-fähige Koppeleinrichtung und jeder IRT-fähige Teilnehmer über eine eigene Uhr, die unter Anwendung eines an sich bekannten standardisierten Verfahrens miteinander synchronisiert werden. Ein solches Verfahren ist beispielsweise durch die Norm IEEE 1588 definiert. Um die erforderliche Zeitgenauigkeit innerhalb PROFINET IRT Systems nicht zu stören oder zu gefährden, dürfen zwischen den IRT-fähigen Koppeleinrichtungen und IRT-fähigen Teilnehmern keine nicht IRT-fähigen Einrichtungen, wie zum Beispiel Standard-Ethernetgeräte verwendet werden.

Der detaillierte Aufbau und die Funktionsweise eines solchen echtzeitgesteuerten Ethernet-Datennetzes gemäß dem PROFINET IRT Standard sind zum Beispiel in der EP 1 388 238 B1 offenbart und dem Fachmann hinlänglich bekannt.

Aus der WO 03/027784 A2 ist ein Verfahren zur Übertragung eines Datentelegramms zwischen einer Nicht-Echtzeit-Domain und einer Echtzeit-Domain bekannt. Das Verfahren umfasst die Schritte: Erzeugung eines Nicht-Echtzeit-Datentelegramms mit einem Nutzdatenbereich, wobei das Datentelegramm eine Echtzeit-oder eine Nicht-Echtzeit-Kennung beinhaltet; Prüfung des Nicht-Echtzeit-Datentelegramms auf das Vorhandensein der Echtzeit-Kennung durch eine Koppeleinheit; Übergabe der Nutzdaten und der Echtzeit-Kennung aus dem Nutzdatenbereich des Nicht-Echtzeit-Datentelegramms an eine Anwenderschnittstelle des Koppelknotens.

Aus er WO 03/036832 A2 ist ein Verfahren zum Betrieb eines Endteilnehmers eines isochronen, zyklischen Kommunikationssystems bekannt. Das Verfahren umfasst die Schritte: Empfang eines Synchronisationsdatentelegramms von einem Durchleiteteilnehmer des Kommunikationssystems durch den Endteilnehmer; Synchronisation einer Zeitbasis des Endteilnehmers mit Hilfe des Synchronisationsdatentelegramms; zyklische Abarbeitung einer Sendeliste von dem Endteilnehmer innerhalb eines Kommunikationszyklus entsprechend der Zeitbasis des Endteilnehmers.

Der Erfindung liegt nunmehr die Aufgabe zugrunde, ein Kommunikationssystem sowie ein Verfahren zur isochronen Datenübertragung bereitzustellen, mit denen auch Komponenten, die nicht zu einer echtzeitgesteuerten Datenübertragung fähig sind, echtzeitkritische Daten über ein echtzeitgesteuertes Ethernet-Datennetz übertragen können, ohne dass die für die echtzeitkritische Datenübertragung erforderliche Zeitgenauigkeit beeinträchtigt wird.

Ein Kerngedanke der Erfindung ist darin zu sehen, herkömmliche Kommunikationseinrichtungen, wie Computer und dergleichen, welche nicht zu einer echtzeitgesteuerten Datenübertragung fähig sind und trotzdem echtzeitkritische Daten übertragen möchten, über eine spezielle Brückeneinrichtung an ein echtzeitgesteuertes Ethernet-Datennetz, wie zum Beispiel ein PROFINET IRT System, anzubinden. Solche Kommunikationseinrichtungen verfügen lediglich über eine Kommunikationsschnittstelle, wie zum Beispiel eine Standard-Ethernetschnittstelle, welche nicht zur Übertragung von echtzeitkritischen Daten mit der hierfür erforderlichen Zeitgenauigkeit geeignet ist. Zudem können insbesondere Standard-Ethernet-Kommunikationseinrichtungen häufig auch nicht durch zusätzliche Steckkarten erweitert werden, da wegen der tiefen Integration von Ethernet-Schnittstellen keine Erweiterungssteckplätze mehr verfügbar sind.

Das oben genannte technische Problem wird zum einen durch die Merkmale des Anspruchs 1 gelöst.

Danach ist ein Kommunikationssystem zur isochronen Datenübertragung vorgesehen, welches ein echtzeitgesteuertes Ethernet-Datennetz mit wenigstens einer ersten Kommunikationseinrichtung umfasst, die jeweils einen synchronisierten Zeitgeber aufweisen. Die ersten Kommunikationseinrichtungen sind dazu ausgebildet, echtzeitkritische Datentelegramme unter Anwendung einer geplanten Echtzeitsteuerung zu übertragen. Angemerkt sei, dass die erste Kommunikationseinrichtung als Koppeleinrichtung, als ein Teilnehmer oder als eine Komponente ausgebildet sein kann, die einen Teilnehmer mit integrierter Koppeleinrichtung aufweist. Weiterhin umfasst das Kommunikationssystem wenigstens eine mit dem echtzeitgesteuerten Ethernet-Datennetz verbundene Brückeneinrichtung. Wenigstens eine zweite Kommunikationseinrichtung ist über eine nicht echtzeitgesteuerte Kommunikationsverbindung mit der Brückeneinrichtung verbunden. Eine solche Kommunikationsverbindung kann eine Standard-Ethernetverbindung sein. Die zweite Kommunikationseinrichtung weist eine Einrichtung zum Bereitstellen von echtzeitkritischen Datentelegrammen, in denen jeweils ein vorbestimmter Sendezeitpunkt enthalten ist, und eine Kommunikationsschnittstelle zur Übertragung echtzeitkritischen Datentelegramme zur Brückeinrichtung auf. Die Kommunikationsschnittstelle, wie zum Beispiel eine Standard-Ethernetschnittstelle, eine USB-, eine WLAN-, eine FireWire- oder PCI-Schnittstelle, unterstützen keine echtzeitgesteuerte Datenübertragung. Die Brückeneinrichtung wiederum enthält einen Zeitgeber, der mit den Zeitgebern der ersten Kommunikationseinrichtzungen synchronisiert, zum Bespiel zeit- oder zyklussychnchronisert ist. Weiterhin enthält die Brückeneinrichtung eine Einrichtung zum Auswerten des Sendezeitpunktes eines von der zweiten Kommunikationseinrichtung kommenden echtzeitkritischen Datentelegramms sowie eine Steuereinrichtung, die in Abhängigkeit von dem ausgewerteten Sendezeitpunkt die Weiterleitung des dazugehörenden echtzeitkritischen Datentelegramms an die wenigstens eine erste Kommunikationseinrichtung des Ethernet-Datennetzes steuert.

Angemerkt sei an dieser Stelle, dass unter einer isochronen Datenübertragung eine Übertragung von Daten in Kommunikationszyklen mit einer vorgegebenen, einstellbaren Zeitdauer verstanden wird. Ein Vorteil dieses Kommunikationssystems ist darin zu sehen, dass die zweite, nicht echtzeitsteuerbare Kommunikationseinrichtung echtzeitkritische Daten in das echtzeitgesteuerte Ethernet-Datennetz senden kann, ohne dass die für das echtzeitgesteuerte Ethernet-Datennetz geforderte Zeitgenauigkeit gestört wird. Betont sei an dieser Stelle, dass die Brückeneinrichtung zum Weiterleiten der von der zweiten Kommunikationseinrichtung kommenden echtzeitkritischen Datentelegramme keinen Sendezeitplan benötigt.

Um bei einem hohen Datenverkehr die Weiterleitung ankommender echtzeitkritischer Datentelegramme in der Brückeneinrichtung flexibel steuern zu können, ist vorteilhafter Weise in den von der zweiten Kommunikationseinrichtung bereitgestellten echtzeitkritischen Datentelegrammen jeweils noch eine Phaseninformation enthalten. Die Phaseninformation, auch Zyklusnummer genannt, bezeichnet einen bestimmten Kommunikationszyklus innerhalb des Ethernet-Datennetzes. Der ebenfalls in einem solchen echtzeitkritischen Datentelegramm übertragene Sendezeitpunkt gibt somit den Sendezeitpunkt bezüglich des definierten Kommunikationszyklus an. Auf diese Weise können zusammengehörende echtzeitkritische Daten in mehreren Kommunikationszyklen gesendet werden. Die Auswerteeinrichtung ist hierzu zum Auswerten der Phaseninformation eines empfangenen echtzeitkritischen Datentelegramms ausgebildet. Die Steuereinrichtung der Brückeneinrichtung steuert in Abhängigkeit von dem ausgewerteten Sendezeitpunkt und der ausgewerteten Phaseninformation die Weiterleitung des dazugehörende echtzeitkritischen Datentelegramms in dem gewünschten Kommunikationszyklus zu der wenigstens einen ersten Kommunikationseinrichtung.

Eine vorteilhafte Ausführungsform sieht vor, dass das echtzeitgesteuerte Ethernet-Datennetz eine PROFINET IRT basiertes Ethernet-Datennetz bildet. Das PROFINET IRT Ethernet-Datennetz wird nachfolgend auch als IRT Domäne bezeichnet.

In diesem Fall sind die ersten Kommunikationseinrichtungen gemäß dem PROFINET IRT Standard ausgebildet. Weiterhin weisen die von der zweiten Kommunikationseinrichtung bereitgestellten echtzeitkritischen Datentelegramme eine Datenstruktur gemäß dem PROFINET IRT Standard auf. Hierdurch wird sichergestellt, dass die von der zweiten Kommunikationseinrichtung bereitgestellten echtzeitkritischen Datentelegramme unverändert in das Ethernet-Datennetz weitergeleitet werden können.

Dies wird insbesondere dadurch erreicht, dass der Sendezeitpunkt und/oder die Phaseninformation an einer vorbestimmten Stelle des Nutzdatenfeldes eines jeweiligen echtzeitkritischen Datentelegramms stehen. Hierzu wird der Beginn der Nutzdaten entsprechend projektiert und die erste Kommunikationseinrichtung kann diese Information einfach ausblenden.

Um die in der Brückeneinrichtung ankommenden echtzeitkritischen Datentelegramme gezielt weiterleiten zu können, können in den von der zweiten Kommunikationseinrichtung bereitgestellten echtzeitkritischen Datentelegrammen jeweils die Nummer eines vorbestimmten Ausgangsports der Brückeneinrichtung enthalten sein. Dadurch wird erreicht, dass die Brückeneinrichtung empfangene echtzeitkritische Datentelegramme zum Sendezeitpunkt auf den ausgewählten Ausgangsports ausgeben kann.

Um einen kompakten Aufbau des Kommunikationssystems zu ermöglichen, kann die Brückeneinrichtung in einer ersten Kommunikationseinrichtung implementiert sein.

Zudem kann die Brückeneinrichtung auch die Funktion eines PROFINET Synchronisationsmasters oder Synchronisationsslaves ausführen.

Die Brückeneinrichtung weist ferner eine Speichereinrichtung zum Zwischenspeichern von echtzeitkritischen Datentelegrammen der zweiten Kommunikationseinrichtung auf. Hierdurch wird sichergestellt, dass in der Brückeneinrichtung keine weiterzuleitenden echtzeitkritischen Datentelegramme verloren gehen, wenn zum Beispiel mehr echtzeitkritische Datentelegramme ankommen als abgesendet werden.

Um auch eine Datenübertragung von der ersten zur zweiten Kommunikationseinrichtung zu ermöglichen, ist die Brückeneinrichtung zum Empfang echtzeitkritischer Datentelegramme, welche von der ersten Kommunikationseinrichtung erzeugt werden, und zum Weiterleiten dieser echtzeitkritischen Datentelegramme zur zweiten Kommunikationseinrichtung ausgebildet ist.
Damit in diesem Fall die zweite Kommunikationseinrichtung den Empfangszeitpunkt eines echtzeitkritischen Datentelegramms ermitteln kann, ist die Brückeneinrichtung dazu ausgebildet ist, den Empfangszeitpunkt in ein von der ersten Kommunikationseinrichtung kommendes zeitkritisches Datentelegramm zu schreiben.

Das oben genannte technische Problem wird ebenfalls durch die Verfahrensschritte des Anspruchs 12 gelöst.

Danach wird ein Verfahren zur isochronen Übertragung von echtzeitkritischen Datentelegrammen innerhalb eines echtzeitgesteuerten Ethernet-Datennetzes verfügbar gemacht. Das Ethernet-Datennetz umfasst wenigsten eine erste Kommunikationseinrichtung, die jeweils einen synchronisierten Zeitgeber aufweisen und dazu ausgebildet ist, echtzeitkritische Datentelegramme unter Anwendung einer geplanten Echtzeitsteuerung zu übertragen.

Zunächst wird wenigstens ein echtzeitkritisches Datentelegramm von einer zweiten Kommunikationseinrichtung bereitgestellt, wobei das echtzeitkritische Datentelegramm einen vorbestimmten Sendezeitpunkt enthält. Das echtzeitkritische Datentelegramm wird über eine Kommunikationsschnittstelle der zweiten Kommunikationseinrichtung zu einer mit dem Ethernet-Datennetzbereich verbundenen Brückeinrichtung übertragen. Die Kommunikationsschnittstelle, welche eine Standard-Ethernet-Schnittstelle sein kann, ist nicht zu einer echtzeitgesteuerten Datenübertragung fähig. Die Brückeneinrichtung weist einen Zeitgeber auf, der mit dem Zeitgeber der wenigstens einen ersten Kommunikationseinrichtung synchronisiert wird. Der in dem empfangenen echtzeitkritischen Datentelegramm übertragene Sendezeitpunkt wird dann in der Brückeneinrichtung ausgewertet und mit Hilfe des Zeitgebers überwacht. Das empfangene echtzeitkritische Datentelegramm wird von der Brückeneinrichtung zu der wenigstens einen ersten Kommunikationseinrichtung weitergeleitet, sobald der Sendezeitpunkt erreicht wird.

Zweckmäßigerweise wird das empfangene echtzeitkritische Datentelegramm so lange in der Brückeinrichtung zwischengespeichert, bis der Sendezeitpunkt erreicht ist.

Um eine schnelle Weiterleitung des echtzeitkritischen Datentelegramms zu ermöglichen, wird das echtzeitkritische Datentelegramm bereits nach der Auswertung des Sendezeitpunktes weitergeleitet, und zwar bevor es vollständig von der Brückeneinrichtung empfangen worden ist.

Um zusammenhängende echtzeitkritische Daten effizient weiterleiten zu können, ist in dem von der zweiten Kommunikationseinrichtung bereitgestellten echtzeitkritischen Datentelegramm ferner eine Phaseninformation enthalten, die den Kommunikationszyklus innerhalb des Ethernet-Datennetzes definiert. Die in dem empfangenen echtzeitkritischen Datentelegramm enthaltene Phaseninformation wird in der Brückeneinrichtung ausgewertet. Das echtzeitkritische Datentelegramm wird von der Brückeneinrichtung an wenigstens eine erste Kommunikationseinrichtung weitergeleitet, und zwar in dem definierten Kommunikationszyklus und zu dem bestimmten Sendezeitpunkt.

Um bei einem hohen Verkehrsaufkommen innerhalb der Brückeneinrichtung echtzeitkritische Datentelegramme effizient weiterleiten zu können, ist es vorteilhaft, in dem bereitgestellten echtzeitkritischen Datentelegramm die Nummer eines Ausgangsports der Brückeneinrichtung zu schreiben. In der Brückeneinrichtung wird dann die in dem empfangenen echtzeitkritischen Datentelegramm enthaltene Ausgangsportnummer ausgewertet und anschließend das echtzeitkritische Datentelegramm über den ausgewählten Ausgangsport der Brückeneinrichtung an die entsprechende erste Kommunikationseinrichtung weitergeleitet, und zwar in dem definierten Kommunikationszyklus und zu den bestimmten Sendezeitpunkt.

Bei einer vorteilhaften Ausführungsform bildet das echtzeitgesteuerte Ethernet-Datennetz eine PROFINET IRT Domäne. In diesem Fall sind die ersten Kommunikationseinrichtungen gemäß dem PROFINET IRT-Standard ausgebildet. Weiterhin weisen die von der ersten und/oder zweiten Kommunikationseinrichtung bereitgestellten echtzeitkritischen Datentelegramme eine Datenstruktur gemäß dem PROFINET IRT Standard auf.

Um die von der zweiten Kommunikationseinrichtung bereitgestellten echtzeitkritischen Datentelegramme unverändert durch das Ethernet-Datennetz übertragen zu können, werden der Sendezeitpunkt und/oder die Phaseninformation und/oder die Ausgangsportnummer an einer vorbestimmten Stelle innerhalb des Nutzdatenfeldes des echtzeitkritischen Datentelegramms geschrieben.

Da der Sendezeitpunkt, die Phaseninformation und/oder die Ausgangsportnummer im Ethernet-Datennetz nicht mehr benötigt werden, können diese Daten vor der Weiterleitung des echtzeitkritischen Datentelegramms aus diesem entfernt werden.

Die Erfindung wird nachfolgend anhand eines Ausführungsbeispiels in Verbindung mit den beiliegenden Zeichnungen näher erläutert. Es zeigen:
- Fig. 1: ein beispielhaftes Kommunikationssystem, in welchem die Erfindung verwirklicht ist,
- Fig. 2: ein detailliertes Blockschaltbild der in Fig. 1 gezeigten IRT Brücke ,
- Fig. 3: die Datenstruktur eines PROFINET IRT Datentelegramms,
- Fig. 4: eine modifizierte Datenstruktur des in Fig. 3 gezeigten Datentelegramms, bei dem in das Nutzdatenfeld der Sendezeitpunkt und eine Phaseninformation geschrieben sind, und
- Fig. 5: Zeitdiagramme zur Erläuterung der Funktionsweise der IRT Brücke.

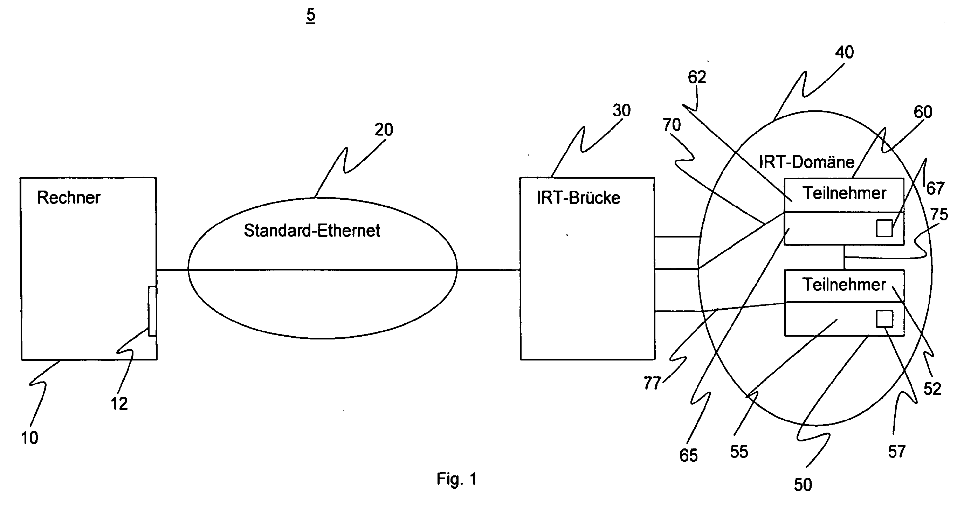

Fig. 1 zeigt ein beispielhaftes Kommunikationssystem 5, das in einer Automatisierungsumgebung zur Steuerung komplexer industrieller Antriebssysteme eingesetzt werden kann. Zur Steuerung derartiger Antriebssysteme ist es erforderlich, dass echtzeitkritische Daten in sehr kurzen Zykluszeiten, zum Beispiel im µs-Bereich, übertragen werden können. Hierzu wurde ein echtzeitfähiges Datenübertragungssystem auf Ethernetbasis unter der Bezeichnung "PROFINET IRT" entwickelt, welches in der Beschreibungseinleitung mit seinen wesentlichen Merkmalen erwähnt worden ist. Ein solches PROFINET IRT System ist vorzugsweise Bestandteil des Kommunikationssystems 5. In Fig. 1 ist dieses System mit dem Bezugszeichen 40 gekennzeichnet. Im Folgenden wird dieser Bereich des Kommunikationssystems 5 als IRT-Domäne oder echtzeitgesteuertes Ethernet-Datennetz 40 bezeichnet. Das Datennetz 40 kann ein geschaltetes Ethernet-Datennetz sein. Aufbau und Funktionsweise eines PROFINET IRT System sind dem Fachmann hinlänglich bekannt, so dass eine ausführliche Erläuterung an dieser Stelle nicht erforderlich ist. Ein solches PROFINET IRT System ist insbesondere in der EP 1 388 238 B1 offenbart.

Das in Fig. 1 lediglich schematisch dargestellte echtzeitgesteuerte Ethernet-Datennetz 40 ist durch drei Ethernet-Verbindungen 70, 75 und 77 angedeutet, an welche beispielhaft zwei IRT-fähige, d. h. echtzeitsteuerbare Kommunikationseinrichtungen 50 und 60 angeschlossen sind. Beide IRT-fähige Kommunikationseinrichtungen 50, 60 enthalten jeweils einen Teilnehmer 52 bzw. 62 und jeweils eine an sich bekannte Koppeleinrichtung 55 bzw. 65. Die Teilnehmer 52 und 62 können an sich bekannte IRT-IO-Geräte (Slaves), wie Aktoren, Sensoren, Antriebssysteme und dergleichen, IRT-IO-Controller (Master), Rechner und dergleichen sein. Erwähnt sei, dass Teilnehmer und Koppeleinrichtungen auch getrennte Kommunikationseinrichtungen sein können.

Um eine echtzeitgesteuerte Datenübertragung innerhalb der IRT-Domäne 40 sicherzustellen, sind in jeder IRT-fähigen Kommunikationseinrichtung, im vorliegenden Fall in den Koppeleinrichtungen 55 und 65, Zeitpläne hinterlegt, die den Sendezeitpunkt für die Weiterleitung zu übertragender echtzeitkritischer Datentelegramme enthalten. Die Koppeleinrichtungen 55 und 65 werden deshalb auch als IRT-fähige Koppeleinrichtungen bezeichnet. Optional können auch die zu den Sendezeitpunkten gehörigen Verbindungsstrecken, über die die echtzeitkritischen Datentelegramme weitergeleitet werden, abgelegt sein. Die Zeitpläne werden vorteilhafter Weise vor der eigentlichen Datenübertragung erstellt und in den Koppeleinrichtungen abgelegt. Somit weiß jede IRT-fähige Koppeleinrichtung 55 und 65, wann und an welchem Ausgangsport ein echtzeitkritisches Datentelegramm gesendet oder weitergeleitet werden soll. Um den präzise Sendezeitpunkt zu erfassen, verfügt jede Koppeleinrichtung 55, 65 über eine eigene Uhr 57 bzw. 67. Beide Uhren sind zueinander synchronisiert. Die zu übertragenden Daten werden in Kommunikationszyklen mit einer einstellbaren Zeitdauer übertragen. Jeder Kommunikationszyklus ist in zwei Zeitbereiche unterteilt. Im ersten Zeitbereich werden die echtzeitkritischen Datentelegramme und im zweiten Zeitbereich die nicht echtzeitkritischen Datentelegramme übertragen. Die Zeitpunkte, zu denen echtzeitkritische Datentelegramme innerhalb des ersten Zeitbereichs eines Kommunikationszyklus übertragen werden können, sind fest vorgegeben. PROFINET IRT Systeme arbeiten mit einer Zeitgenauigkeit im µs-Bereich. Um diese Sendegenauigkeit zu erreichen, werden die speziell ausgebildeten Koppeleinrichtungen 55 und 65 benötigt. Entsprechende Bausteine, mit denen die präzise zeitliche Planung der Echtzeitkommunikation gewährleistet wird, sind bereits auf dem Markt.

Aus der EP 1 388 238 B1 ist ferner bekannt, dass Teilnehmer, die lediglich eine Standard-Ethernet-Schnittstelle aufweisen, an eine Ethernet-Verbindung der IRT-Domäne 40 angeschlossen werden können. Diese Teilnehmer erzeugen lediglich nicht echtzeitkritische Daten, die ausschließlich in dem zweiten Zeitbereich eines Kommunikationszyklus übertragen werden, ohne dass die Echtzeitkommunikation gestört wird.

Wie bereits oben ausgeführt, ist eine spezielle IRT-fähige Hardware in den Kommunikationseinrichtungen 50 und 60 erforderlich, um echtzeitkritische Daten übertragen zu können. Aufgrund der tiefen Integration von Standard-Ethernet-Schnittstellen verfügen zahlreiche Kommunikationseinrichtungen, wie zum Beispiel PC-Architekturen, über keine freien Erweiterungssteckplätze mehr, so dass sie nicht für eine echtzeitkritische Datenübertragung innerhalb der IRT-Domäne verwendet werden können.

Mit dem in Fig. 1 gezeigten Kommunikationssystem 5 ist es nunmehr möglich, dass auch Geräte, die nicht über eine IRT-fähige Ausstattung, sondern lediglich über eine Kommunikationsschnittstelle verfügen, welche keine echtzeitgesteuerte Datenübertragung unterstützt, echtzeitkritische Datentelegramme bereitstellen können, die über die IRT-Domäne 40 übertragen werden können. Eine solche Kommunikationsschnittstelle ist im vorliegenden Beispiel eine Standard-Ethernet-Schnittstelle. Hierbei wird die vom PROFINET IRT-System garantierte echtzeitkritische Datenkommunikation nicht gestört.

Dies wird dadurch erreicht, dass Standard-Ethernet-Geräte über eine IRT-Brückeneinrichtung 30 mit der IRT-Domäne 40 verbunden werden. Die IRT-Brückeneinrichtung 30 kann auch als modifizierter Ethernet-Switch bezeichnet werden.

In Fig. 1 ist eine nicht IRT-fähige Kommunikationseinrichtung, zum Beispiel ein herkömmlicher Standard-Ethernet-Rechner 10 gezeigt. Der Rechner 10 enthält lediglich eine Standard-Ethernet-Schnittstelle 12, über die er mittels eines Ethernetkabels eines Standard-Ethernet-Datennetzes 20 mit der IRT-Brückeneinrichtung 30 verbunden ist. Angemerkt sei, dass mehrere Standard-Ethernet-Geräte über das Standard-Ethernet-Datennetz 20 mit der IRT-Brückeneinrichtung 30 oder einer anderen IRT-Brückeneinrichtung verbunden werden können. Mit der Bezeichnung Standard-Ethernet-Datennetz wird ausgedrückt, dass über ein solches Datennetz keine echtzeitkritischen Daten mit hoher Zeitgenauigkeit übertragen werden können. Angemerkt sei, dass im vorliegen Fall das Standard-Ethernet-Datennetz und der Standard-Ethernet-Rechner lediglich als Beispiele für Einrichtungen verwendet werden, die keine IRT-Fähigkeit besitzen.

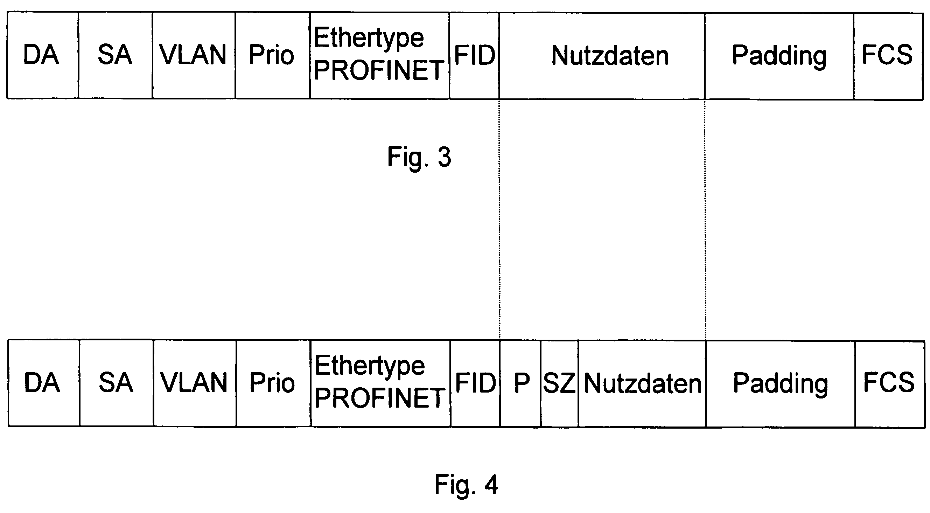

Der Rechner 10 ist dazu ausgebildet, PROFINET IRT kompatible Datentelegramme zu erzeugen, welche über die IRT-Domäne 40 übertragen werden können. Eine beispielhafte Datenstruktur eines PROFINET IRT-Datentelegramms ist in Fig. 3 dargestellt. Solche Datentelegramme können die IRT-fähigen Kommunikationseinrichtungen 50 und 60 übertragen. Das dargestellte PROFINET IRT-Datentelegramm enthält einen Header, der beispielsweise die Zieladresse DA und die Quelladresse SA aufweist. Anstelle der Zieladresse DA kann auch eine MCFF Adresse verwendet werden, welche die an sich bekannten MultiCast Fast Forwarding-Technik des PROFINET IRT Systems unterstützt. Die Datenfelder "VLAN" und "PRIO2" dienen zur Steuerung von nicht echtzeitkritischen Datentelegrammen. Anhand der Datenfelder "Ethertyp Profinet" und "FID" können die Kopplungseinrichtungen 55 und 65 und auch die IRT-Brückeneinrichtung 30 PROFINET IRT Datentelegramme erkennen. Weiterhin enthält das dargestellte PROFINET IRT-Datentelegramm ein Nutzdatenfeld, ein Paddingfeld sowie ein Prüfsummenfeld FCS. Das Paddingfeld ist erforderlich, damit auch bei kleineren Nutzdatenlängen das Datentelegramm nicht kleiner als 64 Bit wird. Dadurch kann die Ethernet-Kompatibilität gewährleistet werden. Wie bereits erwähnt verfügen die Koppeleinrichtungen 55 und 65 über Zeitpläne, die präzise festlegen, wann ein PROFINET IRT Datentelegramm gesendet werden soll. Ein solcher Zeitplan ist in der IRT-Brückeneinrichtung 30 nicht vorgesehen.

Nunmehr muss gewährleistet werden, dass die vom Rechner 10 kommenden echtzeitkritischen Datentelegramme von der IRT-Brückeneinrichtung 30 ohne Störung der in der IRT-Domäne 40 geltenden Zeitpläne übertragen werden können. Dies wird dadurch erreicht, dass der Rechner 10 und die IRT-Brückeneinrichtung 30 entsprechend ausgebildet sind.

Der Rechner 10 verfügt über eine Software, die ihn in die Lage versetzt, in das Nutzdatenfeld eines zu übertragenden PROFINET IRT-Datentelegramms mit der in Fig. 4 gezeigten Datenstruktur den gewünschten Sendezeit SZ und optional eine Phaseninformation P zu schreiben. Die Phaseninformation P entspricht der Nummer eines Kommunikationszyklus innerhalb der IRT-Domäne 40. Weiterhin kann der Rechner 10 auch die Nummer eines Ausgangsports der IRT-Brückeneinrichtung 30 in das Nutzdatenfeld schreiben. Die Phaseninformation P, der Sendezeitpunkt SZ und die Ausgangsportnummer stehen an einer vorbestimmten Stelle innerhalb des Nutzdatenfeldes, sodass die IRT-Brückeneinrichtung 30 diese Information aus dem Nutzdatenfeld eines empfangenen Datentelegramms auslesen kann.

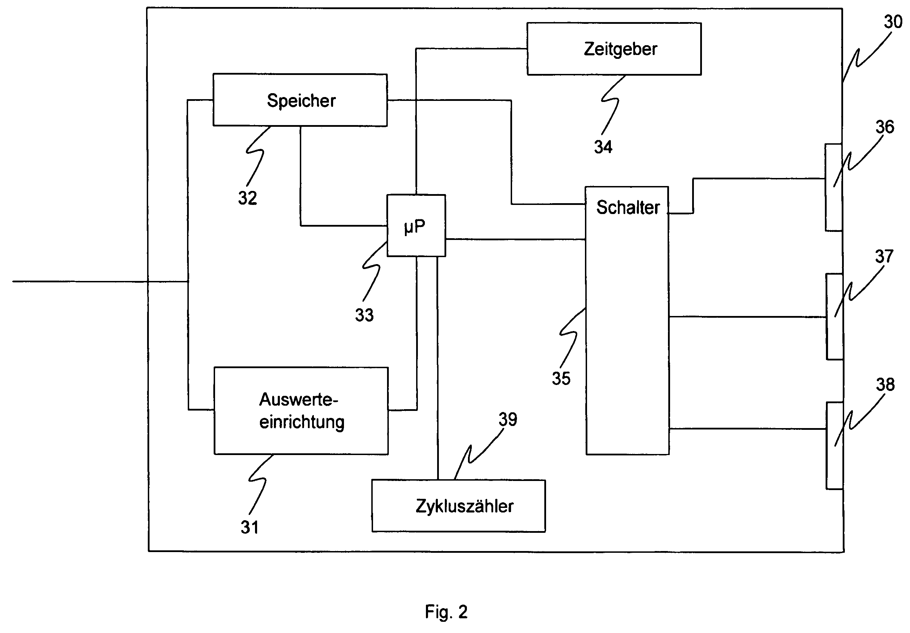

Der prinzipielle Aufbau der IRT-Brückeneinrichtung 30 ist in Fig. 2 gezeigt. Die IRT-Brückeneinrichtung 30 weist eine Auswerteeinrichtung 31 auf, die den Sendezeitpunkt, die Ausgangsportnummer und die Phaseninformation, welche in dem Nutzdatenfeld eines empfangenen PROFINET IRT Datentelegramms enthalten sind, auswerten kann. Betont sei an dieser Stelle, dass der Sendezeitpunkt, die Phaseninformation und die Ausgangsportnummer Informationen für die IRT-Brückeneinrichtung zur Zeitsteuerung echtzeitkritischer Datentelegramme des Rechners 10 sind.

Weiterhin weist die IRT-Brückeneinrichtung 30 einen Speicher 32 auf, in dem die vom Rechner 10 kommenden Datentelegramme, dass können echtzeitkritische und nicht echtzeitkritische Datentelegramme sein, zwischengespeichert werden. Weiterhin ist ein Zeitgeber 34 vorgesehen, der mit den Zeitgebern 57 und 67 der Koppeleinrichtungen 55 und 65 zeitsynchronisiert wird. Verfahren zur Synchronisation der Zeitgeber in einem PROFINET IRT System sind hinlänglich bekannt und werden deshalb nicht näher beschrieben. Wichtig ist nur, dass diese Zeitgeber hochpräzise, d. h. zum Beispiel im µs-Bereich, synchronisiert werden, um eine zeitgenaue Steuerung von Antriebssystemen zu ermöglichen. Weiterhin kann die IRT-Brückeneinrichtung 30 eine Schalteinrichtung 35 aufweisen, die weiterzuleitende echtzeitkritische Datentelegramme in Abhängigkeit der im Nutzdatenfeld enthaltenen Ausgangsportnummer einem bestimmten Ausgangsport der IRT-Brückeneinrichtung 30 zuführen kann. Im vorliegenden Beispiel weist die IRT-Brückeneinrichtung 30 drei Ausgangsports 36, 37 und 38 auf. Die Steuerung und Überwachung der IRT-Brückeneinrichtung 30 und deren Komponenten kann von einer programmierbaren Steuereinrichtung, beispielsweise von einem Mirkoprozessor 33 ausgeführt werden. Ferner kann in der IRT-Brückeneinrichtung 30 ein Zykluszähler 39 vorgesehen sein, der sich mit einem als CycleCounter bekannten Zykluszähler der IRT-Domäne 40 synchronisieren kann.

Die Funktionsweise des Kommunikationssystems 5 und insbesondere die Funktionsweise der IRT-Brückeneinrichtung 30 werden nachfolgend näher erläutert.

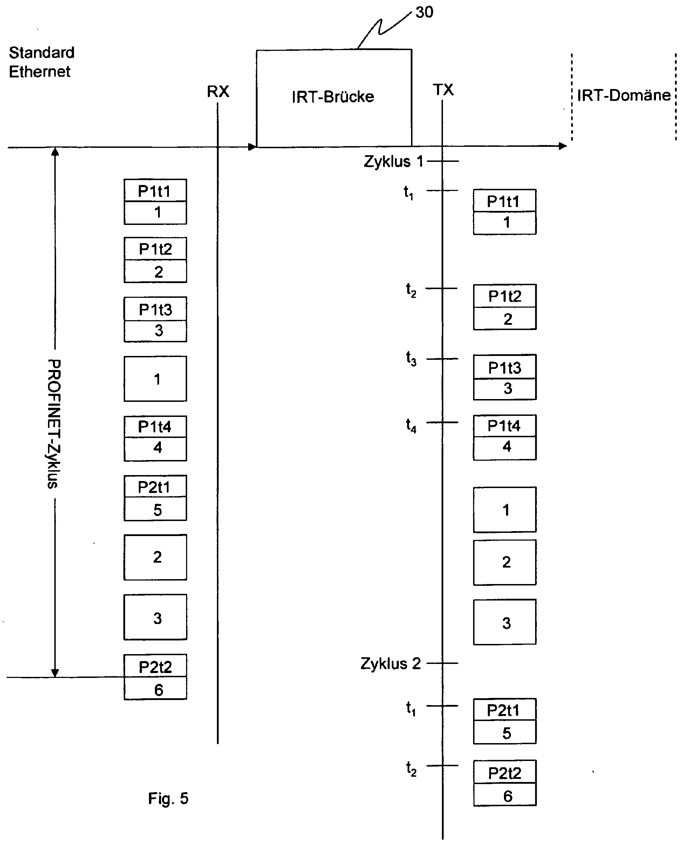

Angenommen sei zunächst, dass der Rechner 10 mehrere echtzeitkritische PROFINRT IRT Datentelegramme und nicht echtzeitkritische Datentelegramme über die Standard-Ethernet-Schnittstelle 12 übertragen möchte. Diese Datentelegramme werden beispielsweise in Kommunikationszyklen gemäß dem nicht echtzeitfähigen PROFINET Standard über das Standard-Ethernet-Datennetz 20 zur IRT-Brückeneinrichtung 30 übertragen. Wie im linken Zeitdiagramm der Figur 5 dargestellt, sendet der Rechner 10 über seine Standard-Ethernet-Schnittstelle 12 beispielsweise sechs echtzeitkritische, modifizierte PROFINRT IRT Datentelegramme, deren beispielhafte Datenstruktur in Fig. 4 gezeigt ist, und drei nicht echtzeitkritische Datentelegramme in einem Kommunikationszyklus zur IRT-Brückeneinrichtung 30. Hierzu schreibt der Rechner 10 in das Nutzdatenfeld jedes echtzeitkritischen Datentelegramms zumindest den gewünschten Sendezeitpunkt. Im vorliegenden Beispiel schreibt der Rechner 10 in das Nutzdatenfeld des ersten echtzeitkritischen Datentelegramms die Phaseninformation P1 und den Sendezeitpunkt t1 ein. Diese Informationen teilen der IRT-Brückeneinrichtung 30 den Kommunikationszyklus und den Sendezeitpunkt innerhalb dieses Kommunikationszyklus, zu dem der echtzeitkritische Datenrahmen übertragen werden muss, mit. In ähnlicher Weise schreibt der Rechner 10 in das Nutzdatenfeld des zweiten zu übertragenden echtzeitkritischen Datentelegramms die Phaseninformation P1 und einen anderen Zeitpunkt t2. In das Nutzdatenfeld des dritten zu übertragenden echtzeitkritischen Datentelegramms schreibt der Rechner 10 die Phaseninformation P1 und den Sendezeitpunkt t3, während das Nutzdatenfeld des vierten zu übertragenden echtzeitkritischen Datentelegramms die Phaseninformation P1 und den Sendezeitpunkt t4 enthält. Mit anderen Worten sollen die ersten vier echtzeitkritischen Datentelegramme zu vier unterschiedlichen Zeitpunkten innerhalb des ersten Kommunikationszyklus von der IRT-Brückeneinrichtung 30 in die IRT-Domäne 40 weitergeleitet werden. Das Nutzdatenfeld des fünften zu übertragenden echtzeitkritischen Datentelegramms enthält die Phaseninformation P2 und den Sendezeitpunkt t1. Die Phaseninformation P2 zeigt an, dass dieses echtzeitkritische Datentelegramm im zweiten Kommunikationszyklus der IRT-Domäne 40 übertragen werden muss. Schließlich enthält das Nutzdatenfeld des sechsten zu übertragenden Datentelegramms die Phaseninformation P2 und den Sendezeitpunkt t2. Diese sechs zu übertragenden echtzeitkritischen Datentelegramme können alle die in Fig. 4 gezeigte Datenstruktur eines modifizierten PROFINET IRT-Datentelegramms aufweisen.

Optional kann in dem Nutzdatenfeld der sechs zu übertragenden echtzeitkritischen Datentelegramme auch noch die Ausgangsportnummer enthalten sein, die angibt über welchen der drei Ausgangsport 36, 37 und 38 das jeweilige echtzeitkritische Datentelegramm zu übertragen ist. Im vorliegenden Beispiel sei angenommen, dass keine Ausgangsportnummer in den Nutzdatenfeldern enthalten ist. Für diesen Anwendungsfall kann die IRT-Brückeneinrichtung 30 derart eingestellt sein, dass alle echtzeitkritischen Datentelegramme über den Ausgangsport 36 in die IRT-Domäne 40 geleitet werden.

Die Auswerteeinrichtung 31 kann anhand der Felder "Ethertyp PROFINET" und "FID" die echtzeitkritischen Datentelegramme des Rechners 10 erkennen. Stellt die Auswerteeinrichtung 31 nunmehr fest, dass das erste echtzeitkritische Datentelegramm des Rechners 10 angekommen ist, so liest sie aus der vorbestimmten Stelle des Nutzdatenfeldes den Sendezeitpunkt t1 und die Phaseninformation P1 aus. In ähnlicher Weise wertet die Auswerteeinrichtung 31 die fünf weiteren echtzeitkritischen Datentelegramme des Rechners 10 aus. Die Datentelegramme des Rechners 10 können allesamt oder teilweise im Speicher 32 der IRT-Brückeneinrichtung 30 abgelegt werden. Weiterhin können die ausgewerteten Informationen und eine Identifizierung der dazugehörenden echtzeitkritischen Datentelegramme in einer Nachschlagetabelle der IRT-Brückeneinrichtung 30 gespeichert werden. Der Mikroprozessor 33 überwacht den Zeitgeber 34, den Zykluszähler 39 sowie gegebenenfalls die Nachschlagetabelle.

Wiederholt sei an dieser Stelle noch einmal, dass die Kommunikationszyklen der IRT-Domäne 40 jeweils einen ersten Bereich, in dem echtzeitkritische Datentelegramme übertragen werden, und einen zweiten Bereich aufweisen, in dem zeitunkritische Datentelegramme übertragen werden. Wie im rechten Zeitdiagramm der Fig. 5 dargestellt, umfasst der erste Zeitbereich eines Kommunikationszyklus der IRT-Domäne 40 beispielsweise vier Sendezeitpunkte T1, T2, T3 und T4, die präzise festgelegt sind.

Sobald der Mikroprozessor 33 erkannt hat, dass der im ersten echtzeitkritischen Datentelegramm enthaltene Sendezeitpunkt t1 mit der aktuellen Zeit des Zeitgebers 34 übereinstimmt, und die Phaseninformation P1 mit dem aktuellen Wert des Zykluszählers 39 übereinstimmt, wird das erste echtzeitkritische Datentelegramm über den Schalter 35 dem Ausgangsport 36 zugeführt und von dort zum Zeitpunkt t1 im ersten Kommunikationszyklus in die IRT-Domäne 40 weitergeleitet. In Abhängigkeit von der Zieladresse DA wird das Datentelegramm beispielsweise zum Teilnehmer 62 übertragen. In ähnlicher Weise sorgt der Mikroprozessor 33 dafür, dass das zweite echtzeitkritische Datentelegramm zum Sendezeitpunkt t2 des ersten Kommunikationszyklus, das dritte echtzeitkritische Datentelegramm zum Sendezeitpunkt t3 des ersten Kommunikationszyklus und das vierte echtzeitkritische Datentelegramm zum Sendezeitpunkt t4 des ersten Kommunikationszyklus in die IRT-Domäne 40 weitergeleitet werden. Anschließend können die drei nicht echtzeitkritischen Datentelegramme des Rechners 10 im zweiten Zeitbereich des ersten Kommunikationszyklus in die IRT-Domäne 40 weitergeleitet werden, wie in Fig. 5 dargestellt. Die IRT-Brückeneinrichtung 30 erkennt die nicht echtzeitkritischen Datentelegramme des Rechners 10 anhand der Daten in den Feldern "VLAN" und "PRIO" eines PROFINET IRT-Datentelegramms. Die an sich bekannten PROFINET Regeln zur Übertragung von nicht echtzeitkritischen Datentelegrammen werden hierbei von der IRT-Brückeneinrichtung 30 berücksichtigt.

Unter Ansprechen auf die Ergebnisse der Auswerteeinrichtung 31, die in der oben erwähnten Nachschlagetabelle gespeichert sein können, weiß der Mikroprozessor 33, dass das fünfte und sechste echtzeitkritische Datentelegramm im zweiten Kommunikationszyklus weitergeleitet werden müssen.

Der Mikroprozessor 33 überwacht nach wie vor den Zeitgeber 34 und den Zykluszähler 39. Sobald der Mikroprozessor 33 erkannt hat, dass der im fünften echtzeitkritischen Datentelegramm enthaltene Sendezeitpunkt t1 mit der aktuellen Zeit des Zeitgebers 34 übereinstimmt, und die Phaseninformation P2 mit dem aktuellen Wert des Zykluszählers 39 übereinstimmt, wird das fünfte echtzeitkritische Datentelegramm aus dem Speicher 32 ausgelesen und über den Schalter 35 dem Ausgangsport 36 zugeführt und von dort zum Zeitpunkt t1 im zweiten Kommunikationszyklus in die IRT-Domäne 40 weitergeleitet. In Abhängigkeit von der Zieladresse DA wird das Datentelegramm beispielsweise zum Teilnehmer 52 übertragen. In ähnlicher Weise sorgt der Mikroprozessor 33 dafür, dass das sechste echtzeitkritische Datentelegramm zum Sendezeitpunkt t2 des zweiten Kommunikationszyklus in die IRT-Domäne 40 weitergeleitet wird, wie in Fig. 5 dargestellt.

Angemerkt sei an dieser Stelle, dass die echtzeitkritischen Datentelegramme bereits dann von der IRT-Brückeneinrichtung 30 weitergeleitet werden können, wenn die Auswerteeinrichtung 31 die Phaseninformation P und den Sendezeitpunkt SZ ausgewertet hat, ohne dass das jeweilige Datentelegramm vollständig empfangen oder bereits vollständig im Speicher 32 abgelegt worden ist.

Weiterhin ist es möglich, dass die IRT-Brückeneinrichtung 30, je nach Implementierung, die vom Rechner 10 kommenden echtzeitkritischen Datentelegramme unverändert in die IRT-Domäne weiterleiten kann. Alternativ ist denkbar, dass die IRT-Brücke 30 vor der Weiterleitung eines empfangenen echtzeitkritischen Datentelegramms den Sendezeitpunkt SZ, und gegebenenfalls die Phaseninformation P sowie die Ausgangsportnummer vor der Weiterleitung aus dem Nutzdatenfeld entfernen kann. Denn diese Informationen werden in der IRT-Domäne 40 nicht mehr benötigt.

Überdies kann die IRT-Brückeneinrichtung 30 beispielsweise auch innerhalb der Kommunikationseinrichtung 50 oder 60 angeordnet sein kann. Denkbar ist ferner, dass die IRT-Brückeneinrichtung auch die Funktion eines PROFINET Synchronisationsmasters, welcher hinlänglich bekannt ist, ausführen kann.

Weiterhin sei angemerkt, dass die Koppeleinrichtungen 55 und 65 die genaue Lage der Nutzdaten innerhalb eines PROFINET IRT-Datentelegramms kennen und somit in der Lage sind, die Phaseninformation und den Sendezeitpunkt innerhalb eines Nutzdatenfeldes auszublenden. Dies ermöglicht die transparente Weiterleitung der vom Rechner 10 bereitgestellten echtzeitkritischen Datentelegramme innerhalb der IRT-Domäne, ohne bestehende Hardware ändern zu müssen.

Schließlich sei erwähnt, dass die IRT-fähigen Kommunikationseinrichtungen echtzeitkritische Datentelegramme gemäß der in Fig. 3 gezeigten Datenstruktur zur Brückeneinrichtung 30 übertragen können. Je nach Implementierung kann die Brückeneinrichtung 30 in die empfangenen echtzeitkritischen Datentelegramme den jeweiligen Empfangszeitpunkt schreiben, bevor sie die Datentelegramme an den Rechner 10 weiterleitet.

## Patentansprüche

1. Kommunikationssystem (5) zur isochronen Datenübertragung, umfassend
- ein echtzeitgesteuertes Ethernet-Datennetz (40) mit wenigstens einer ersten Kommunikationseinrichtung (50, 60), die einen synchronisierten Zeitgeber (57, 67) aufweist und dazu ausgebildet ist, echtzeitkritische Datentelegramme unter Anwendung einer geplanten Echtzeitsteuerung zu übertragen,
- wenigstens eine Brückeneinrichtung (30),
- wenigstens eine zweite, mit der Brückeneinrichtung verbundene Kommunikationseinrichtung (10), welche eine Einrichtung zum Bereitstellen von echtzeitkritischen Datentelegrammen, in denen jeweils ein vorbestimmter Sendezeitpunkt enthalten ist, und eine Kommunikationsschnittstelle (12) aufweist, über welche die echtzeitkritischen Datentelegramme zur Brückeneinrichtung (30) übertragen werden, wobei die Kommunikationsschnittstelle (12) keine echtzeitgesteuerte Datenübertragung unterstützt,
wobei die Brückeneinrichtung (30) aufweist:
- einen Zeitgeber (34), der mit dem Zeitgeber (57, 67) der ersten Kommunikationseinrichtung (50, 55, 60, 65) synchronisiert ist,
- eine Einrichtung (31), die zum Auswerten des Sendezeitpunktes eines von der zweiten Kommunikationseinrichtung (10) gesendeten echtzeitkritischen Datentelegramms ausgebildet ist, und
- eine Steuereinrichtung (33), die ausgebildet ist, in Abhängigkeit von dem in einem echtzeitkritischen Datentelegramm enthaltenen Sendezeitpunkt die Weiterleitung des dazugehörenden echtzeitkritischen Datentelegramms an die wenigstens eine erste Kommunikationseinrichtung (50, 60) des Ethernet-Datennetzes (40) zu steuern.

2. Kommunikationssystem nach Anspruch 1, **dadurch gekennzeichnet,**
**dass** die von der zweiten Kommunikationseinrichtung (10) bereitgestellten echtzeitkritischen Datentelegramme jeweils eine Phaseninformation enthalten, die den Kommunikationszyklus innerhalb des echtzeitgesteuerten Ethernet-Datennetzes definiert,
**dass** die Auswerteeinrichtung (31) zum Auswerten der Phaseninformation eines von der zweiten Kommunikationseinrichtung (10) empfangenen echtzeitkritischen Datentelegramms ausgebildet ist, und
**dass** die Steuereinrichtung (33) ausgebildet ist, in Abhängigkeit von dem ausgewerteten Sendezeitpunkt und der ausgewertete Phaseninformation die Weiterleitung des dazugehörenden echtzeitkritischen Datentelegramms in dem gewünschten Kommunikationszyklus an die wenigstens eine erste Kommunikationseinrichtung (50, 60) des Ethernet-Datennetzes zu steuern.

3. Kommunikationssystem nach Anspruch 1 oder 2, **dadurch gekennzeichnet,**
**dass** das echtzeitgesteuerte Ethernet-Datennetz (40) ein PROFINET IRT basiertes Ethernet-Datennetz bildet,
**dass** die wenigstens eine erste Kommunikationseinrichtung (50, 60) gemäß dem PROFINET IRT Standard ausgebildet ist,
**dass** die von der zweiten Kommunikationseinrichtung (10) bereitgestellten echtzeitkritischen Datentelegramme eine Datenstruktur gemäß dem PROFINET IRT Standard aufweisen.

4. Kommunikationssystem nach Anspruch 3, **dadurch gekennzeichnet, dass**
der Sendezeitpunkt und/oder die Phaseninformation an einer vorbestimmten Stelle des Nutzdatenfeldes eines jeweiligen echtzeitkritischen Datentelegramms stehen.

5. Kommunikationssystem nach einem der vorstehenden Ansprüche, **dadurch gekennzeichnet, dass**
in den von der zweiten Kommunikationseinrichtung (10) bereitgestellten echtzeitkritischen Datentelegrammen jeweils die Nummer eines vorbestimmten Ausgangsports (36-38) der Brückeneinrichtung (30) enthalten ist.

6. Kommunikationssystem nach einem der vorstehenden Ansprüche, **dadurch gekennzeichnet, dass**
die Brückeneinrichtung (30) in einer ersten Kommunikationseinrichtungen (50, 60) implementiert ist.

7. Kommunikationssystem nach einem der vorstehenden Ansprüche, **dadurch gekennzeichnet, dass**
die Brückeneinrichtung (30) die Funktion eines PROFINET Synchronisationsmasters oder eines Synchronistionsslaves ausführt.

8. Kommunikationssystem nach einem der vorstehenden Ansprüche, **dadurch gekennzeichnet, dass**
die Brückeneinrichtung (30) eine Speichereinrichtung (32) zum Zwischenspeichern von, von der zweiten Kommunikationseinrichtung (10) empfangenen echtzeitkritischen Datentelegrammen aufweist.

9. Kommunikationssystem nach einem der vorstehenden Ansprüche, **dadurch gekennzeichnet, dass**
die Brückeneinrichtung (30) zum Empfang von echtzeitkritischen Datentelegrammen, welche von der ersten Kommunikationseinrichtung (50, 60) erzeugt werden, und zum Weiterleiten dieser echtzeitkritischen Datentelegrammen zur zweiten Kommunikationseinrichtung (10) ausgebildet ist.

10. Kommunikationssystem nach Anspruch 9, **dadurch gekennzeichnet, dass**
die Brückeneinrichtung (30) dazu ausgebildet ist, in die von der ersten Kommunikationseinrichtung (50, 60) kommenden zeitkritischen Datentelegrammen den jeweiligen Empfangszeitpunkt zu schreiben.

11. Kommunikationssystem nach einem der vorstehenden Ansprüche, **dadurch gekennzeichnet, dass**
die Kommunikationsschnittstelle (12) eine Standard-Ethernetschnittstelle, eine USB-, eine WLAN-, eine FireWire- oder eine PCI-Schnittstelle ist.

12. Verfahren zur isochronen Übertragung von echtzeitkritischen Datentelegrammen innerhalb eines echtzeitgesteuerten Ethernet-Datennetzes (40),
welches wenigstens eine erste Kommunikationseinrichtung (50, 60) enthält, die einen synchronisierten Zeitgeber (57, 67) aufweist und dazu ausgebildet ist, echtzeitkritische Datentelegramme unter Anwendung einer geplanten Echtzeitsteuerung zu übertragen,
wobei in der wenigstens einen ersten Kommunikationseinrichtung (50, 60) die Sende- oder Weiterleitungszeitpunkte der zu übertragenden echtzeitkritischen Datentelegramme abgelegt sind, mit folgenden Schritten:
- Bereitstellen, von einer zweiten Kommunikationseinrichtung (10), wenigstens eines echtzeitkritischen Datentelegramms, in welches von der zweiten Kommunikationseinrichtung (10) ein vorbestimmter Sendezeitpunkt eingeschrieben wird;
- Senden des echtzeitkritischen Datentelegramms über die Kommunikationsschnittstelle (12) einer zweiten Kommunikationseinrichtung (10) zu einer mit dem echtzeitgesteuerten Ethernet-Datennetz (40) verbundenen Brückeneinrichtung (30), die einen Zeitgeber (34) aufweist, der mit den Zeitgebern (57, 67) der ersten Kommunikationseinrichtungen (50, 60) synchronisiert wird, wobei die Kommunikationsschnittstelle keine echtzeitgesteuerte Datenübertragung unterstützt;
- Auswerten, in der Brückeneinrichtung (30), des in dem empfangenen echtzeitkritischen Datentelegramms übertragenen Sendezeitpunktes;
- Überwachen des Sendezeitpunkts mit Hilfe des Zeitgebers (34); und
- Weiterleiten des empfangenen echtzeitkritischen Datentelegramms, von der Brückeneinrichtung (30) an die wenigstens eine erste Kommunikationseinrichtungen (50, 60) des Ethernet-Datennetzes (40), sobald der in dem empfangenen echtzeitkritischen Datentelegramm übertragene Sendezeitpunkt erreicht wird.

13. Verfahren nach Anspruch 12, **dadurch gekennzeichnet, dass**
das empfangene echtzeitkritische Datentelegramm solange in der Brückeneinrichtung (30) zwischengespeichert wird, bis der Sendezeitpunkt erreicht wird.

14. Verfahren nach Anspruch 12 oder 13, **dadurch gekennzeichnet, dass**
das echtzeitkritische Datentelegramm bereits nach der Auswertung des Sendezeitpunktes weitergeleitet wird, und zwar bevor es vollständig in der Brückeneinrichtung (30) empfangen worden ist.

15. Verfahren nach einem der Ansprüche 12 bis 14, **dadurch gekennzeichnet, dass**
in dem bereitgestellten echtzeitkritischen Datentelegramm eine Phaseninformation enthalten ist, die den Kommunikationszyklus innerhalb des Ethernet-Datennetzes (40) definiert, dass
in der Brückeneinrichtung (30) die in dem empfangenen echtzeitkritischen Datentelegramm enthaltene Phaseninformation ausgewertet wird, und dass
das echtzeitkritische Datentelegramm von der Brückeneinrichtung (30) an die wenigstens eine erste Kommunikationseinrichtung (50, 60) des Ethernet-Datennetzes 840) in dem definierten Kommunikationszyklus und zu dem bestimmten Sendezeitpunkt weitergeleitet wird.

16. Verfahren nach einem der Ansprüche 12 bis 15, **dadurch gekennzeichnet, dass**
in dem bereitgestellten echtzeitkritischen Datentelegramm die Nummer.eines Ausgangsports (36-38) der Brückeneinrichtung (30) enthalten ist, dass
in der Brückeneinrichtung (30) die in dem empfangenen echtzeitkritischen Datentelegramm enthaltene Ausgangsportnummer ausgewertet wird, und dass
das echtzeitkritische Datentelegramm über den ausgewählten Ausgangsport der Brückeneinrichtung an die wenigstens eine erste Kommunikationseinrichtung (50, 60) des Ethernet-Datennetzes in dem definierten Kommunikationszyklus und zu dem bestimmten Sendezeitpunkt weitergeleitet wird.

17. Verfahren nach einem der Ansprüche 12 bis 16, **dadurch gekennzeichnet, dass**
das echtzeitgesteuerte Ethernet-Datennetz (40) ein PROFINET IRT basiertes Ethernet-Datennetz bildet, dass
die wenigstens eine erste Kommunikationseinrichtung (50, 55; 60, 65) gemäß dem PROFINET IRT Standard ausgebildet ist, dass
die von der zweiten Kommunikationseinrichtung (10) bereitgestellten echtzeitkritischen Datentelegramme eine Datenstruktur gemäß dem PROFINET IRT Standard aufweisen.

18. Verfahren nach Anspruch 17, **dadurch gekennzeichnet, dass**
der Sendezeitpunkt und/oder die Phaseninformation und/oder die Ausgangsportnummer an eine vorbestimmte Stelle innerhalb des Nutzdatenfeldes des echtzeitkritischen Datentelegramms geschrieben wird.

19. Verfahren nach einem der Ansprüche 12 bis 18, **dadurch gekennzeichnet, dass**
der Sendezeitpunkt, die Phaseninformation und/oder die Ausgangsportnummer vor der Weiterleitung des echtzeitkritischen Datentelegramms aus diesem entfernt werden.

## Claims

1. A communication system (5) for isochronous data transmission, comprising:
- a real-time controlled Ethernet data network (40) with at least one first communication device (50, 60) which includes a synchronized timer (57, 67) and which is adapted to transmit real-time critical data telegrams using a scheduled real-time control;
- at least one bridge device (30);
- at least one second communication device (10) connected to the bridge device and including means for providing real-time critical data telegrams each of which contains a predetermined transmission time, and a communication interface (12) via which the real-time critical data telegrams are transmitted to the bridge device (30), wherein the communication interface (12) does not support real-time controlled data transmission;
wherein the bridge device (30) comprises:
- a timer (34) which is synchronized with the timer (57, 67) of the first communication device (50, 55, 60, 65);
- means (31) adapted to evaluate the transmission time of a real-time critical data telegram transmitted by the second communication device (10); and
- control means (33) adapted to control, in response to the transmission time contained in a real-time critical data telegram, the forwarding of the associated real-time critical data telegram to the at least one first communication device (50, 60) of the Ethernet data network (40).

2. The communication system according to claim 1, **characterised in**
**that** the real-time critical data telegrams provided by the second communication device (10) each contain a phase information defining the communication cycle within the real-time controlled Ethernet data network;
**that** the evaluating means (31) is adapted to evaluate the phase information of a real-time critical data telegram received from the second communication device (10); and
**that** the control means is adapted to control, in response to the evaluated transmission time and the evaluated phase information, the forwarding of the associated real-time critical data telegram in the desired communication cycle to the at least one first communication device (50, 60) of the Ethernet data network.

3. The communication system according to claim 1 or claim 2, **characterised in**
**that** the real-time controlled Ethernet data network (40) is an Ethernet data network based on PROFINET IRT;
**that** the at least one first communication device (50, 60) is configured according to the PROFINET IRT standard;
**that** the real-time critical data telegrams provided by the second communication device (10) have a data structure according to the PROFINET IRT standard.

4. The communication system according to claim 3, **characterised in that**
the transmission time and/or the phase information is/are contained at a predetermined location of the payload data field of a respective real-time critical data telegram.

5. The communication system according to any of the preceding claims, **characterised in that**
the real-time critical data telegrams provided by the second communication device (10) each contain the number of a predetermined output port (36 - 38) of the bridge device (30).

6. The communication system according to any of the preceding claims, **characterised in that**
the bridge device (30) is implemented in one of the first communication devices (50, 60).

7. The communication system according to any of the preceding claims, **characterised in that**
the bridge device (30) performs the function of a PROFINET synchronization master or a synchronization slave.

8. The communication system according to any of the preceding claims, **characterised in that**
the bridge device (30) has a memory means (32) for buffering real-time critical data telegrams received from the second communication device (10).

9. The communication system according to any of the preceding claims, **characterised in that**
the bridge device (30) is adapted to receive real-time critical data telegrams generated by the first communication device (50, 60), and for forwarding these real-time critical data telegrams to the second communication device (10).

10. The communication system according to claim 9, **characterised in that**
the bridge device (30) is adapted to write the respective reception time into the real-time critical data telegrams arriving from the first communication device (50, 60).

11. The communication system according to any of the preceding claims, **characterised in that**
the communication interface (12) is a standard Ethernet interface, a USB interface, a WLAN interface, a FireWire interface, or a PCI interface.

12. A method of isochronous transmission of real-time critical data telegrams within a real-time controlled Ethernet data network (40)
which comprises at least one first communication device (50, 60) that includes a synchronized timer (57, 67) and is adapted to transmit real-time critical data telegrams using a scheduled real-time control;
wherein the transmission or forwarding times of the real-time critical data telegrams to be transmitted are stored in the at least one first communication device (50, 60); comprising the steps of:
- providing, by a second communication device (10), at least one real-time critical data telegram into which a predetermined transmission time is written by the second communication device (10);
- transmitting the real-time critical data telegram via the communication interface (12) of a second communication device (10) to a bridge device (30) connected to the real-time controlled Ethernet data network (40), which has a timer (34) that is synchronized with the timers (57, 67) of the first communication devices (50, 60), wherein the communication interface does not support real-time controlled data transmission;
- evaluating, in the bridge device (30), the transmission time transmitted in the received real-time critical data telegram;
- monitoring the transmission time using the timer (34); and
- forwarding the received real-time critical data telegram from the bridge device (30) to the at least one first communication device (50, 60) of the Ethernet data network (40) as soon as the transmission time transmitted in the received real-time critical data telegram has been reached.

13. The method according to claim 12, **characterised in that**
the received real-time critical data telegram is buffered in the bridge device (30) until the transmission time is reached.

14. The method according to claim 12 or 13, **characterised in that**
the real-time critical data telegram is already forwarded once the transmission time has been evaluated and before it has been completely received in the bridge device (30).

15. The method according to any of claims 12 to 14, **characterised in that**
the provided real-time critical data telegram contains phase information defining the communication cycle within the Ethernet data network (40); that
the phase information contained in the received real-time critical data telegram is evaluated in the bridge device (30); and that
the real-time critical data telegram is forwarded by the bridge device (30) to the at least one first communication device (50, 60) of the Ethernet data network (40) in the defined communication cycle and at the defined transmission time.

16. The method according to any of claims 12 to 15, **characterised in that**
the provided real-time critical data telegram contains the number of an output port (36 - 38) of the bridge device (30); that
the output port number contained in the received real-time critical data telegram is evaluated in the bridge device (30); and that
the real-time critical data telegram is forwarded via the selected output port of the bridge device to the at least one first communication device (50, 60) of the Ethernet data network in the defined communication cycle and at the defined transmission time.

17. The method according to any of claims 12 to 16, **characterised in that**
the real-time controlled Ethernet data network (40) is an Ethernet data network based on PROFINET IRT; that
the at least one first communication device (50, 55; 60, 65) is configured according to the PROFINET IRT standard; that
the real-time critical data telegrams provided by the second communication device (10) have a data structure according to the PROFINET IRT standard.

18. The method according to claim 17, **characterised in that**
the transmission time and/or the phase information and/or the output port number is/are written to a predetermined location within the payload data field of the real-time critical data telegram.

19. The method according to any of claims 12 to 18, **characterised in that**
the transmission time, the phase information, and/or the output port number are removed from the real-time critical data telegram before it is forwarded.

## Revendications

1. Système de communication (5) permettant la transmission isochrone de données, comprenant :
- un réseau de données Ethernet (40) commandé en temps réel comprenant au moins un premier dispositif de communication (50, 60), qui comprend un registre d'horloge (57, 67) synchronisé et qui est conçu pour transmettre des télégrammes de données critiques en temps réel au moyen d'une commande en temps réel planifiée,
- au moins un dispositif de pont (30),
- au moins un deuxième dispositif de communication (10) qui est relié au dispositif de pont et qui comprend un dispositif permettant de fournir des télégrammes de données critiques en temps réel, dans chacun desquels un instant d'émission prédéfini est contenu, et une interface de communication (12), par l'intermédiaire de laquelle les télégrammes de données critiques en temps réel sont transmis au dispositif de pont (30), l'interface de communication (12) n'assistant aucune transmission de données commandée en temps réel,
le dispositif de pont (30) comprenant :
- un registre d'horloge (34), qui est synchronisé avec le registre d'horloge (57, 67) du premier dispositif de communication (50, 55, 60, 65),
- un dispositif (31), qui est conçu pour évaluer l'instant d'émission d'un télégramme de données critique en temps réel émis par le deuxième dispositif de communication (10), et
- un dispositif de commande (33), qui est conçu pour commander, en fonction de l'instant d'émission contenu dans un télégramme de données critique en temps réel, le transfert du télégramme de données critique en temps réel correspondant à l'au moins un premier dispositif de communication (50, 60) du réseau de données Ethernet (40).

2. Système de communication selon la revendication 1, **caractérisé en ce que** :
les télégrammes de données critiques en temps réel fournis par le deuxième dispositif de communication (10) contiennent chacun une information de phase qui définit le cycle de communication à l'intérieur du réseau de données Ethernet commandé en temps réel,
le dispositif d'évaluation (31) est conçu pour évaluer l'information de phase d'un télégramme de données critique en temps réel reçu par le deuxième dispositif de communication (10), et
le dispositif de commande (33) est conçu pour commander, en fonction de l'instant d'émission évalué et de l'information de phase évaluée, le transfert du télégramme de données critique en temps réel correspondant dans le cycle de communication souhaité à l'au moins un premier dispositif de communication (50, 60) du réseau de données Ethernet.

3. Système de communication selon la revendication 1 ou 2, **caractérisé en ce que** :
le réseau de données Ethernet commandé en temps réel (40) forme un réseau de données Ethernet basé sur PROFINET IRT,
l'au moins un premier dispositif de communication (50, 60) est conçu selon la norme PROFINET IRT,
les télégrammes de données critiques en temps réel fournis par le deuxième dispositif de communication (10) comprennent une structure de données selon la norme PROFINET IRT.

4. Système de communication selon la revendication 3, **caractérisé en ce que** :
l'instant d'émission et/ou l'information de phase se situent à un emplacement prédéfini du champ de données utiles d'un télégramme de données critique en temps réel respectif.

5. Système de communication selon l'une quelconque des revendications précédentes, **caractérisé en ce que** :
le numéro d'un port de sortie (36-38) prédéfini du dispositif de pont (30) est contenu dans chacun des télégrammes de données critiques en temps réel fournis par le deuxième dispositif de communication (10).

6. Système de communication selon l'une quelconque des revendications précédentes, **caractérisé en ce que** :
le dispositif de pont (30) est implémenté dans un premier dispositif de communication (50, 60).

7. Système de communication selon l'une quelconque des revendications précédentes, **caractérisé en ce que** :
le dispositif de pont (30) exécute la fonction d'une synchronisation maître ou d'une synchronisation esclave PROFINET.

8. Système de communication selon l'une quelconque des revendications précédentes, **caractérisé en ce que** :
le dispositif de pont (30) comprend un dispositif mémoire (32) servant à la mise en mémoire temporaire de télégrammes de données critiques en temps réel reçus par le deuxième dispositif de communication (10).

9. Système de communication selon l'une quelconque des revendications précédentes, **caractérisé en ce que** :
le dispositif de pont (30) est conçu pour recevoir des télégrammes de données critiques en temps réel, lesquels sont produits par le premier dispositif de communication (50, 60), et pour transférer ces télégrammes de données critiques en temps réel au deuxième dispositif de communication (10).

10. Système de communication selon la revendication 9, **caractérisé en ce que** :
le dispositif de pont (30) est conçu pour écrire dans les télégrammes de données critiques en temps réel provenant du premier dispositif de communication (50, 60) l'instant d'émission respectif.

11. Système de communication selon l'une quelconque des revendications précédentes, **caractérisé en ce que** :
l'interface de communication (12) est une interface Ethernet standard, une interface USB, une interface WLAN, une interface FireWire ou une interface PCI.

12. Procédé de transmission isochrone de télégrammes de données critiques en temps réel à l'intérieur d'un réseau de données Ethernet commandé en temps réel (40),
lequel contient au moins un premier dispositif de communication (50, 60), qui comprend un registre d'horloge (57, 67) synchronisé et qui est conçu pour transmettre des télégrammes de données critiques en temps réel au moyen d'une commande en temps réel planifiée,
les instants d'émission ou de transfert des télégrammes de données critiques en temps réel à transmettre étant mis en mémoire dans l'au moins un premier dispositif de communication (50, 60), ledit procédé comprenant les étapes suivantes :
- la fourniture, par un deuxième dispositif de communication (10), d'au moins un télégramme de données critique en temps réel, dans lequel un instant d'émission prédéfini est inscrit par le deuxième dispositif de communication (10),
- l'émission du télégramme de données critique en temps réel par l'intermédiaire de l'interface de communication (12) d'un deuxième dispositif de communication (10) à un dispositif de pont (30) qui est relié au réseau de données Ethernet commandé en temps réel (40) et qui comprend un registre d'horloge (34) qui est synchronisé avec les registres d'horloge (57, 67) des premiers dispositifs de communication (50, 60), l'interface de communication n'assistant aucune transmission de données commandée en temps réel ;
- l'évaluation, dans le dispositif de pont (30), de l'instant d'émission transmis dans le télégramme de données critique en temps réel reçu ;
- la surveillance de l'instant d'émission à l'aide du registre d'horloge (34) ; et
- le transfert du télégramme de données critique en temps réel reçu, par le dispositif de pont (30) à l'au moins un premier dispositif de communication (50, 60) du réseau de données Ethernet (40), dès que l'instant d'émission transmis dans le télégramme de données critique en temps réel reçu est atteint.

13. Procédé selon la revendication 12, **caractérisé en ce que** :
le télégramme de données critique en temps réel reçu est mis temporairement en mémoire dans le dispositif de pont (30) jusqu'à ce que l'instant d'émission ait été atteint.

14. Procédé selon la revendication 12 ou 13, **caractérisé en ce que** :
le télégramme de données critique en temps réel est déjà transféré après l'évaluation de l'instant d'émission, et ce avant qu'il n'ait été entièrement reçu dans le dispositif de pont (30).

15. Procédé selon l'une quelconque des revendications 12 à 14, **caractérisé en ce que** :
une information de phase qui définit le cycle de communication à l'intérieur du réseau de données Ethernet (40) est contenue dans le télégramme de données critique en temps réel fourni,
l'information de phase contenue dans le télégramme de données critique en temps réel reçu est évaluée dans le dispositif de pont (30), et
le télégramme de données critique en temps réel est transféré par le dispositif de pont (30) à l'au moins un premier dispositif de communication (50, 60) du réseau de données Ethernet (40) dans le cycle de communication défini et à l'instant d'émission défini.

16. Procédé selon l'une quelconque des revendications 12 à 15, **caractérisé en ce que** :
le numéro d'un port de sortie (36-38) du dispositif de pont (30) est contenu dans le télégramme de données critique en temps réel fourni,
le numéro de port de sortie contenu dans le télégramme de données critique en temps réel reçu est évalué dans le dispositif de pont (30), et
le télégramme de données critique en temps réel est transféré par l'intermédiaire du port de sortie sélectionné du dispositif de pont à l'au moins un premier dispositif de communication (50, 60) du réseau de données Ethernet dans le cycle de communication défini et à l'instant d'émission défini.

17. Procédé selon l'une quelconque des revendications 12 à 16, **caractérisé en ce que** :
le réseau de données Ethernet commandé en temps réel (40) forme un réseau de données Ethernet basé sur PROFINET IRT,
l'au moins un premier dispositif de communication (50, 55 ; 60, 65) est conçu selon la norme PROFINET IRT,
les télégrammes de données critiques en temps réel fournis par le deuxième dispositif de communication (10) comprennent une structure de données selon la norme PROFINET IRT.

18. Procédé selon la revendication 17, **caractérisé en ce que** :
l'instant d'émission et/ou l'information de phase et/ou le numéro de port de sortie sont écrits à un emplacement prédéfini à l'intérieur du champ de données utiles du télégramme de données critique en temps réel.

19. Procédé selon l'une quelconque des revendications 12 à 18, **caractérisé en ce que** :
l'instant d'émission, l'information de phase et/ou le numéro de port de sortie sont retirés du télégramme de données critique en temps réel avant le transfert de ce dernier.
